# FASCICULE DE BREVET EUROPEEN

(11) **EP 3 199 027 B1**
(45) Date de publication et mention de la délivrance du brevet: **24.02.2021**
(21) Numéro de dépôt: 17153219.5
(22) Date de dépôt: 26.01.2017
(51) Int. Cl.: F25C 1/243, A21B 3/13, A23P 30/10

(54) **MOULE FLEXIBLE A RAIDISSEUR PERIPHERIQUE, ET PROCEDE DE FABRICATION D'UN TEL MOULE**
FLEXIBLE FORM MIT UMLAUFENDER VERSTEIFUNG, UND VERFAHREN ZUR HERSTELLUNG EINER SOLCHEN FORM
FLEXIBLE MOLD WITH PERIPHERAL STIFFENER, AND METHOD FOR MANUFACTURING SUCH A FLEXIBLE MOLD

(30) Priorité: 28.01.2016 FR 1650676
(43) Date de publication de la demande: 02.08.2017
(73) Titulaire: Viancin, Jean-Charles, Hong Kong (CN)
(72) Inventeur: Viancin, Jean-Charles, Hong Kong (CN)
(74) Mandataire: Cabinet Poncet

(56) Documents cités:
- WO-A1-2013/140000
- FR-A1- 2 827 494
- US-A1- 2005 199 132
- US-A1- 2005 199 636
- US-A1- 2006 083 833
- US-A1- 2009 061 128

## Description

### DOMAINE TECHNIQUE DE L'INVENTION

La présente invention concerne les moules alimentaires, généralement utilisés pour la pâtisserie ou la préparation d'autres aliments en cuisine, ou pour la confection de glaçons, comprenant un corps de moule alimentaire ayant une ou plusieurs alvéoles à paroi flexible, les alvéoles étant ouvertes selon une face commune d'accès que l'on oriente vers le haut lors de l'utilisation, la face commune d'accès étant elle-même limitée par un rebord périphérique se développant radialement vers l'extérieur et permettant la préhension du moule alimentaire.

Le caractère flexible de la paroi des alvéoles facilite le démoulage.

Ce caractère flexible de la paroi des alvéoles entraîne toutefois l'inconvénient d'une déformation du moule alimentaire lors de sa manipulation en le tenant par le rebord périphérique, lorsque le moule alimentaire est entièrement constitué d'un matériau flexible à base de silicone, et lorsque les alvéoles sont remplis. Cet inconvénient est d'autant plus gênant dans les moules alimentaires présentant une grande dimension, par exemple les moules alimentaires professionnels pour les cuisines collectives.

On connaît déjà des moules alimentaires pour la cuisine dans lesquels le rebord périphérique est associé à un élément raidisseur. Ces moules sont décrits par exemple dans les documents EP 1 132 000 A1 ou EP 1 197 149 B1. Dans un premier mode de réalisation, l'élément raidisseur est formé par un fil en métal ou en plastique à section transversale circulaire, sumoulé par injection dans le silicone constituant le rebord périphérique, et disposé à proximité de la zone périphérique du rebord périphérique.

En pratique, lors de la fabrication de ces moules alimentaires connus, l'élément raidisseur est directement incorporé dans un moule de mise en forme, puis surmoulé par du silicone introduit dans le moule de mise en forme. Il est nécessaire de prévoir des moyens de maintien pour tenir en position l'élément raidisseur dans le moule de mise en forme pendant la fusion du silicone, à défaut de quoi l'élément raidisseur n'est généralement pas recouvert de silicone. Toutefois les moyens de maintien s'opposent alors à la présence de silicone dans plusieurs zones de surface de l'élément raidisseur. Il en résulte que, après fabrication, plusieurs zones de surface de l'élément raidisseur ne sont encore pas recouvertes par le silicone, ce qui crée des difficultés lors de l'utilisation ultérieure du moule alimentaire dans un four micro-ondes ou dans un lave-vaisselle.

Le document FR 2 822 024 A3 décrit un moule flexible pour aliments dans lequel un support métallique est englobé à l'intérieur du bord du moule par fusion. Ce document ne décrit aucun procédé de fabrication permettant de noyer totalement le support à l'intérieur du matériau formant le corps de moule.

Le document US 2009/061128 A1 décrit un moule alimentaire selon le préambule de la revendication 1, et un procédé de fabrication dans lequel le renfort métallique est tenu, au moment du moulage, par des entretoises en silicone surmoulées.

Le document US 2005/199636 A1 décrit un moule alimentaire selon le préambule de la revendication 1 et dans lequel l'élément raidisseur périphérique est bordé extérieurement, selon deux zones de préhension opposées, par une bande périphérique de matériau réalisant des zones de préhension à largeur augmentée. Ce document ne décrit pas le procédé de fabrication permettant de noyer totalement l'élément raidisseur à l'intérieur du matériau de moulage.

Par des essais, le demandeur a tenté de trouver une solution à ce problème en obturant les zones de surface dépourvues de silicone, lors d'une opération de reprise au cours de laquelle on introduit une matière de moulage complémentaire. Un premier inconvénient réside toutefois dans le fait que les zones obturées restent décelables, soit par une légère différence de teinte de matière, soit par une irrégularité de la surface extérieure du moule alimentaire au droit des zones obturées. Un second inconvénient résulte dans le fait que l'opération de reprise doit être effectuée manuellement, ce qui empêche une automatisation complète du processus de fabrication de moule alimentaire, et ce qui introduit un risque d'erreur et d'obturation incomplète.

### EXPOSE DE L'INVENTION

La présente invention vise à éviter les inconvénients de ces moules alimentaires connus, en proposant un nouveau procédé de fabrication de moule alimentaire grâce auquel la totalité de la surface externe des éléments raidisseurs est occultée de manière fiable, automatisable, totalement invisible et indécelable, permettant d'utiliser des éléments raidisseurs en métal sans que cela perturbe l'utilisation ultérieure du moule alimentaire dans un four micro-ondes ou dans un lave-vaisselle.

La présente invention vise ainsi à réaliser des moules alimentaires dont l'occultation des éléments raidisseurs est fiable, totale et indécelable. En particulier, l'occultation des éléments raidisseurs est réalisée de façon totale sans laisser subsister aucune irrégularité de la surface extérieure du moule alimentaire.

Le cas échéant, la présente invention permet de réaliser des moules alimentaires dont la paroi présente au moins deux zones de couleurs différentes.

L'invention vise en outre à assurer le cas échéant une meilleure ergonomie, en facilitant la préhension du moule alimentaire par le rebord périphérique.

L'invention vise en outre à augmenter le cas échéant la surface d'échange thermique entre le moule alimentaire et l'atmosphère intérieure d'un four.

Pour atteindre ces buts ainsi que d'autres, l'invention propose un moule selon la revendication 1.

Selon un autre aspect, l'invention propose procédé de réalisation d'un tel moule alimentaire, ledit procédé comprenant les étapes suivantes :
- prévoir un élément raidisseur périphérique, sous forme d'un renfort annulaire continu, et le cas échéant un ou plusieurs éléments raidisseurs intermédiaires,
- appliquer, sur une première face de l'élément raidisseur périphérique, et le cas échéant sur une première face du ou des éléments raidisseurs intermédiaires, une première pâte de moulage,
- chauffer sous pression l'ensemble éléments raidisseurs - première pâte de moulage ainsi obtenu dans un premier moule de mise en forme réalisant un surmoulage de la première face de l'élément raidisseur périphérique et le cas échéant du ou des éléments raidisseurs intermédiaires avec la première pâte de moulage, puis laisser refroidir,
- retourner l'ensemble éléments raidisseurs - première pâte de moulage ainsi obtenu, et disposer sur la seconde face du ou des éléments raidisseurs des bandes d'une seconde pâte de moulage selon un volume égal à celui de la paroi du moule alimentaire à réaliser,
- placer l'ensemble éléments raidisseurs - première pâte de moulage - seconde pâte de moulage ainsi obtenu dans un second moule de mise en forme et le chauffer sous pression pour réaliser un corps de moule alimentaire ayant un ou plusieurs alvéoles à paroi flexible ouverts selon une face commune d'accès, la face commune d'accès étant elle-même limitée par un rebord périphérique se développant vers l'extérieur, l'élément raidisseur périphérique et le cas échéant le ou les éléments raidisseurs intermédiaires étant entièrement noyés dans la pâte de moulage, puis laisser refroidir.

Grâce à ce procédé, la pâte de silicone de moulage entoure de manière certaine la totalité de la surface extérieure des éléments raidisseurs, sans laisser apparaître aucune trace d'obturation ou d'irrégularité sur la surface extérieure du moule alimentaire ainsi réalisé.

L'excellente qualité du surmoulage total obtenu garantit la fiabilité de l'utilisation du moule alimentaire dans un four micro-ondes ou dans un lave-vaisselle.

En outre, la disposition des bandes de pâte de silicone de moulage peut-être réalisée de façon relativement aisée, ce qui autorise son automatisation. En d'autres termes, le procédé de fabrication du moule alimentaire peut ainsi être entièrement automatisé.

On notera que l'expression « face commune d'accès » désigne la face d'ouverture donnant l'accès à l'intérieur des alvéoles.

Selon un mode de réalisation particulier, dans lequel le moule alimentaire comprend des pieds d'appui, le procédé est tel que :
- l'élément raidisseur périphérique comporte initialement un renfort annulaire métallique continu solidaire d'amorces d'excroissances métalliques,
- le premier moule de mise en forme comporte des logements recevant les amorces d'excroissances, évitant leur surmoulage par la première pâte de moulage lors du chauffage sous pression de l'ensemble constitué par le renfort périphérique et la première pâte de moulage,
- le second moule de mise en forme comporte des logements recevant les amorces d'excroissances, évitant leur surmoulage par la pâte de moulage lors du chauffage sous pression de l'ensemble constitué par le renfort périphérique et les première et seconde pâtes de moulage.

Après démoulage hors du second moule de mise en forme, on fixe, sur les amorces d'excroissances, des structures métalliques complémentaires réalisant les pieds d'appui.

La surface extérieure du moule alimentaire ainsi réalisé ne comporte aucune trace d'obturation ou d'irrégularité.

En pratique, le corps de moule alimentaire peut être en un matériau à base de silicone, de qualité alimentaire, tandis que l'élément raidisseur peut être en métal. Les matériaux à base de silicone présentent de bonnes propriétés de flexibilité et de résistance aux températures généralement utilisées dans la préparation des aliments. Quant à lui, le métal constituant l'élément raidisseur confère une grande raideur sous un faible volume.

La position particulière de l'élément raidisseur périphérique dans les zones de préhension opposées du rebord périphérique, notamment le fait que sa périphérie reste en retrait du bord extérieur du rebord périphérique, laisse subsister une bande périphérique de matériau constituant le corps de moule alimentaire, ladite bande périphérique présentant une flexibilité plus grande que celle de l'élément raidisseur périphérique, conférant une plus grande douceur de préhension qui améliore l'ergonomie. Simultanément, ladite bande périphérique de matériau constituant le corps de moule alimentaire présente une plus faible inertie thermique, facilitant la préhension à plus faible température en sortie d'un four.

De préférence, dans les deux zones de préhension opposées du rebord périphérique, la face principale supérieure du rebord périphérique est légèrement orientée vers l'extérieur, de sorte qu'elle est en retrait de la face commune d'accès.

De la sorte, la face commune d'accès forme la surface supérieure du moule alimentaire en utilisation, facilitant considérablement les opérations d'arasement pour enlèvement de la matière excédentaire des alvéoles. En particulier, les opérations d'arasement peuvent être exécutées rapidement et aisément à l'aide d'une règle ou d'une lame rectilignes.

La structure du corps de moule alimentaire est renforcée en prévoyant au moins un élément raidisseur intermédiaire, rejoignant des zones opposées de l'élément raidisseur périphérique, ledit élément raidisseur intermédiaire étant entièrement noyé dans le matériau formant la paroi supérieure du corps de moule alimentaire entre des alvéoles adjacents.

On réduit ainsi les risques d'une déformation du corps de moule alimentaire lors de l'utilisation, de sorte que la face commune d'accès reste plane malgré l'éventuelle grande dimension du moule alimentaire.

En pratique, le moule alimentaire selon l'invention peut avantageusement présenter un contour rectangulaire, et dans ce cas l'élément raidisseur intermédiaire peut rejoindre des zones opposées de deux grands côtés de l'élément raidisseur périphérique.

Dans les applications pour les cuisines collectives, le corps de moule alimentaire peut avantageusement présenter un contour dont la longueur est d'environ 60 cm et la largeur d'environ 40 cm, avec deux éléments raidisseurs intermédiaires rejoignant des zones opposées respectives des deux grands côtés de l'élément raidisseur périphérique, les éléments raidisseurs intermédiaires étant parallèles aux petits côtés de l'élément raidisseur périphérique et divisant la face commune d'accès en trois bandes transversales ayant des superficies similaires les unes aux autres.

Un tel corps de moule alimentaire présente alors une grande dimension, et les applications professionnelles d'un tel moule alimentaire obligent à garantir un excellent maintien de forme des alvéoles, alors que la grande taille du moule alimentaire tend au contraire à dégrader la forme du contour des alvéoles lors de la fabrication du moule alimentaire, à cause du retrait de la matière.

Pour éviter encore une telle déformation des contours des alvéoles, tout en évitant les déformations de la face commune d'accès plane, l'élément raidisseur périphérique peut avantageusement être réalisé en acier au carbone et présenter une section transversale de forme carrée, de 6 mm par 6 mm.

En alternative, dans les applications pour les cuisines collectives, le corps de moule alimentaire peut avantageusement présenter un contour dont la longueur est d'environ 40 cm et la largeur d'environ 30 cm, avec un élément raidisseur intermédiaire rejoignant des zones opposées respectives des deux grands côtés de l'élément raidisseur périphérique, l'élément raidisseur intermédiaire étant parallèle aux petits côtés de l'élément raidisseur périphérique en divisant la face commune d'accès en deux bandes transversales ayant des superficies similaires les unes aux autres.

Un tel corps de moule alimentaire présente alors une plus faible dimension, adaptée à la forme de certains fours présents dans les cuisines collectives.

Dans ce cas, pour éviter la déformation des contours des alvéoles, tout en évitant les déformations de la face commune d'accès plane, il est suffisant que l'élément raidisseur périphérique soit réalisé en acier au carbone et présente une section transversale de forme carrée, de 4 mm par 4 mm.

Selon un mode de réalisation avantageux, l'élément raidisseur périphérique est solidaire d'excroissances se développant perpendiculairement et à l'écart de la face commune d'accès, au-delà des fonds des alvéoles, pour constituer des pieds d'appui par lesquels le moule alimentaire peut reposer sur un plan d'appui en maintenant les fonds des alvéoles à l'écart du plan d'appui.

De la sorte, le moule alimentaire peut reposer sur le fond d'un four à chaleur tournante, et la circulation d'air chaud peut se faire sur toute la surface extérieure du moule alimentaire pour favoriser l'échange thermique.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue de dessus d'un moule alimentaire flexible selon un premier mode de réalisation de la présente invention ;
- la figure 2 est une vue de côté droit du moule alimentaire de la figure 1, à plus grande échelle ;
- la figure 3 est une vue de dessous du moule alimentaire de la figure 1 ;
- la figure 4 est une vue de face en coupe selon la ligne A-A du moule alimentaire de la figure 1 ;
- la figure 5 est une vue en perspective illustrant les parties constitutives du moule alimentaire de la figure 1 ;
- la figure 6 est une vue en perspective de l'élément raidisseur périphérique du moule alimentaire de la figure 1 ;
- la figure 6A et une vue partielle en coupe à plus grande échelle selon le plan B-B de la figure 6 ;
- la figure 7 est une vue en perspective d'un premier moule de mise en forme pour le surmoulage de l'élément raidisseur périphérique de la figure 6, pour illustrer le procédé selon l'invention ;
- la figure 8 est une vue en perspective d'un second moule de mise en forme pour la réalisation du moule alimentaire flexible de la figure 1, pour illustrer le procédé selon l'invention ;
- la figure 9 est une vue de dessus d'un moule alimentaire flexible selon un second mode de réalisation de la présente invention ;
- la figure 10 est une vue de dessous du moule alimentaire flexible de la figure 9 ;
- la figure 11 est une vue de face en coupe selon la ligne C-C de la figure 9 ;
- la figure 12 est une vue de dessus d'un moule alimentaire flexible qui ne fait pas partie de la présente invention ;
- la figure 13 est une vue de face du moule alimentaire flexible de la figure 12 ;
- la figure 14 est une vue de face en coupe longitudinale selon le plan D-D de la figure 12 ;
- la figure 15 est une vue en perspective d'un premier moule de mise en forme pour le surmoulage de l'élément raidisseur périphérique du moule alimentaire flexible de la figure 12 ; et
- la figure 16 est une vue en perspective d'un second moule de mise en forme pour la réalisation du moule alimentaire flexible de la figure 12.

### DESCRIPTION DES MODES DE REALISATION PREFERES

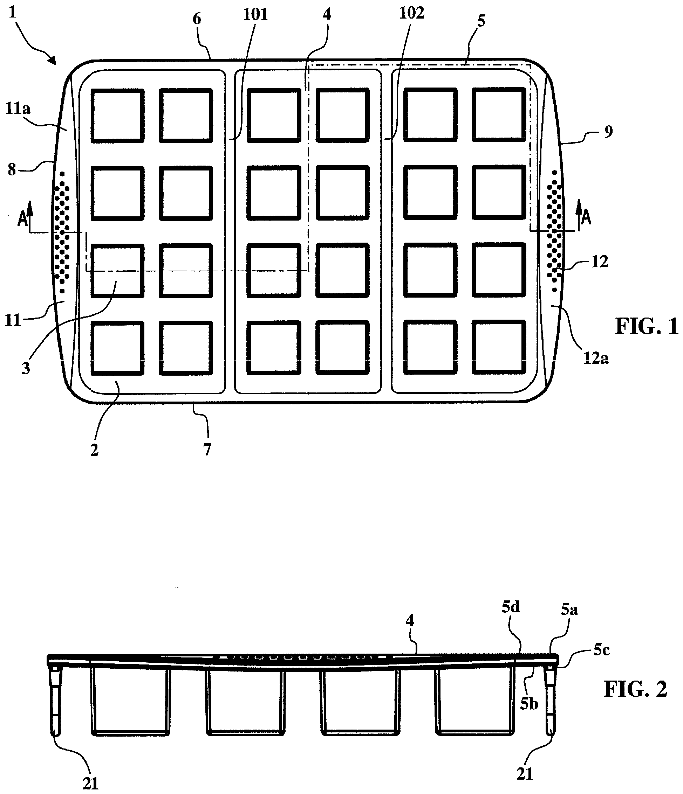

On considère tout d'abord le moule alimentaire flexible 1 selon un premier mode de réalisation illustré sur les figures 1 à 5.

Dans ce mode de réalisation, le moule alimentaire flexible 1 est un moule alimentaire pour la cuisine ou la pâtisserie, et comprend un corps de moule alimentaire 2, ayant 24 alvéoles identiques tels que l'alvéole 3, répartis régulièrement selon la surface du moule alimentaire 1, selon 4 rangées et 6 colonnes. Chaque alvéole tel que l'alvéole 3 présente une forme cylindrique à contour carré dans laquelle les côtés adjacents de l'alvéole sont perpendiculaires et plans. L'alvéole 3 est limité par un fond 3a et est ouvert selon une face d'ouverture 3b opposée au fond 3a.

Les faces d'ouverture telles que la face 3b de tous les alvéoles sont disposées selon une face commune d'accès 4 plane qui, lors de l'utilisation du moule alimentaire, forme la face supérieure du moule alimentaire.

La face commune d'accès 4 est elle-même limitée par un rebord périphérique 5 se développant radialement vers l'extérieur, et comportant lui-même une face principale supérieure 5a, une face principale inférieure 5b, un bord extérieur libre 5c et un bord intérieur 5d marquant la limite avec la ou les alvéoles 3.

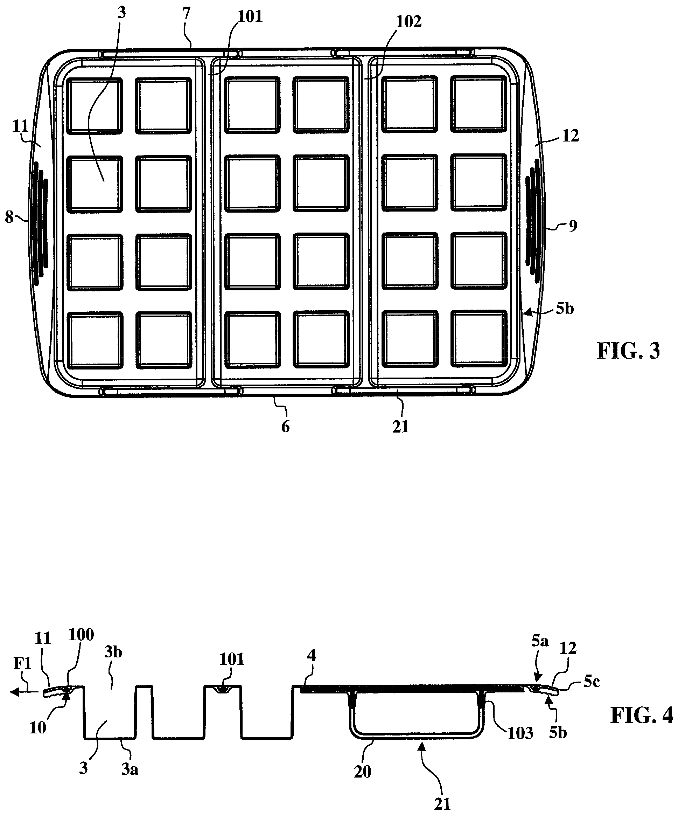

Comme on le voit sur les figures 1 et 3, dans ce mode de réalisation, le moule alimentaire 1 présente un contour rectangulaire défini par deux grands côtés 6 et 7 et deux petits côtés 8 et 9. Également dans ce mode de réalisation, la longueur du moule alimentaire est d'environ 60 cm, et sa largeur d'environ 40 cm.

Le corps de moule alimentaire 2 est réalisé en un matériau de corps de moule à base de silicone, conférant aux parois des alvéoles 3 une flexibilité permettant leur déformation lors de l'utilisation, pour un démoulage de leur contenu.

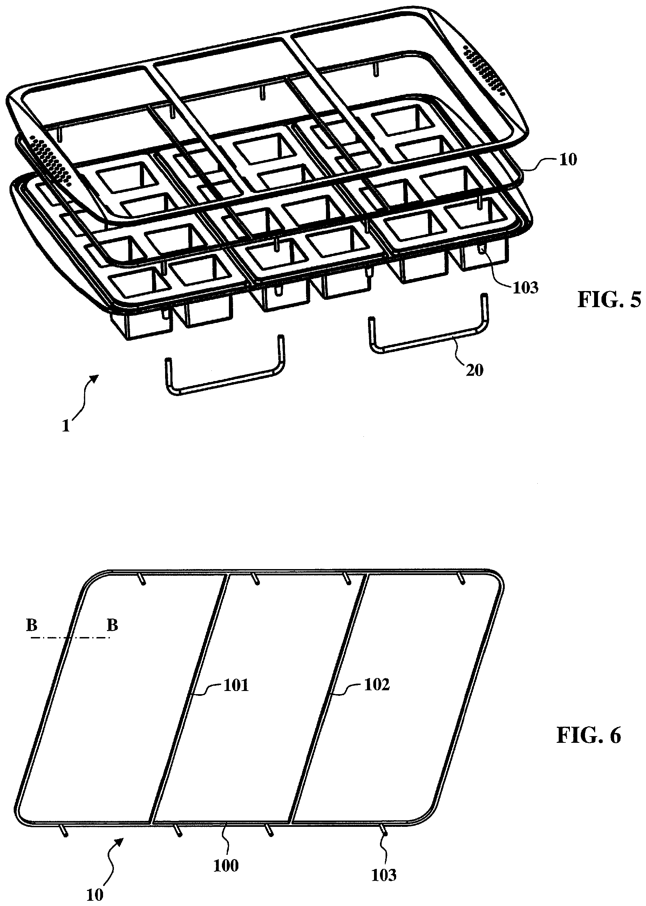

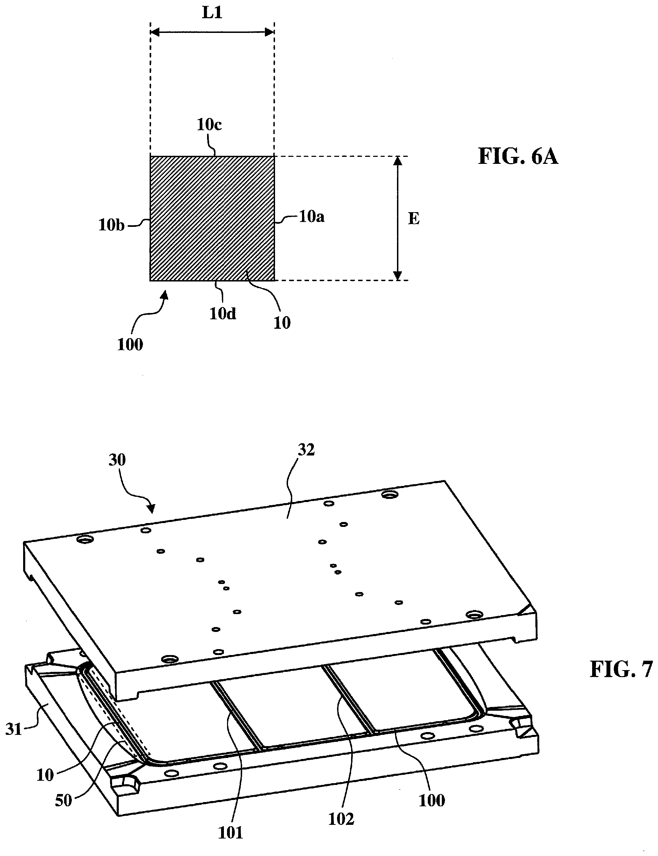

Le rebord périphérique 5 est muni d'un élément raidisseur périphérique 10, visible en coupe sur la figure 4, et visible en totalité dans la vue éclatée illustrée sur la figure 5, ainsi que sur la figure 6. L'élément raidisseur périphérique 10 est sous forme d'un renfort annulaire continu 100, dont la section transversale est illustrée à plus grande échelle sur la figure 6A. Ainsi, l'élément raidisseur périphérique 10 est limité par une face intérieure 10a et une face extérieure 10b distantes l'une de l'autre selon une largeur L1, et limité par deux faces principales 10c et 10d distantes l'une de l'autre selon une épaisseur E. La largeur L1 est supérieure ou égale à l'épaisseur E. En pratique, pour la dimension indiquée du moule alimentaire 1 dans ce mode de réalisation, c'est-à-dire avec une longueur d'environ 60 cm et une largeur d'environ 40 cm, l'épaisseur E et la largeur L1 peuvent être d'environ 6 mm chacune.

Dans le moule alimentaire 1, l'élément raidisseur périphérique 10 est positionné de telle sorte que les faces principales 10c et 10d sont parallèles à la face commune d'accès 4. Par ailleurs, l'élément raidisseur périphérique 10 est réalisé en un métal présentant de bonnes propriétés de rigidité mécanique, et est entièrement noyé dans le matériau de corps de moule à base de silicone. Pour cela, le rebord périphérique 5 présente en tous points une largeur supérieure à la largeur L1 du renfort annulaire continu 100 de l'élément raidisseur périphérique 10, et son épaisseur est supérieure à l'épaisseur E du renfort annulaire continu 100 de l'élément raidisseur périphérique 10.

Selon les petits côtés 8 et 9 du moule alimentaire 1, le rebord périphérique 5 présente une plus grande largeur et forme deux zones de préhension opposées 11 et 12. Dans chacune des deux zones de préhension opposée 11 et 12, l'élément raidisseur périphérique 10 est bordé extérieurement par une bande périphérique respective 11a et 12a de matériau constituant le corps de moule alimentaire 2. La bande périphérique 11a ou 12a réalise l'augmentation de largeur de la zone de préhension 11 ou 12, et présente une flexibilité nettement plus grande que celle de l'élément raidisseur périphérique 10.

Dans le mode de réalisation illustré sur la figure 4 en coupe longitudinale, on voit que la face principale supérieure 5a du rebord périphérique 5 est légèrement orientée vers l'extérieur, de sorte qu'elle est en retrait de la face commune d'accès 4, et de sorte que les zones de préhension 11 et 12 se développent légèrement en oblique vers le bas, c'est-à-dire vers le fond 3a des alvéoles 3. De la sorte, la préhension du moule alimentaire 1 est facilitée, lors d'un mouvement de traction horizontale par exemple pour sortir le moule alimentaire d'un four : il suffit alors d'appliquer l'extrémité de doigts d'une main sous une zone de préhension 11 ou 12, en supportant la zone de préhension 11 ou 12 et en la tirant vers l'extérieur du four pour faire glisser le moule alimentaire 1 hors du four (flèche F1).

En considérant à nouveau le mode de réalisation des figures 1 à 6, on voit que le moule alimentaire 1 comprend en outre deux éléments raidisseurs intermédiaires 101 et 102, rejoignant chacun deux zones opposées de deux grands côtés de l'élément raidisseur périphérique 10. En pratique, comme illustré sur la figure 6, les éléments raidisseurs intermédiaires 101 et 102 rejoignent des zones opposées de deux grands côtés du renfort annulaire continu 100, en étant parallèles aux petits côtés du renfort annulaire continu 100. Comme on le comprend sur les figures 1 et 3, les éléments raidisseurs intermédiaires 101 et 102 divisent la face commune d'accès 4 en trois bandes transversales ayant des superficies similaires les unes aux autres, chacune des bandes transversales comportant 8 alvéoles dans le mode de réalisation illustré. Dans tous les cas, les éléments raidisseurs intermédiaires 101 et 102 sont également noyés dans le matériau de corps de moule.

Comme on le voit plus distinctement sur la figure 6, dans ce mode de réalisation, l'élément raidisseur périphérique 10 est solidaire d'amorces d'excroissances telles que l'amorce d'excroissance 103, se développant perpendiculairement et à l'écart de la face supérieure destinée à être la plus proche de la face commune d'accès 4 sur les figures 1 à 5. Les amorces d'excroissances 103 peuvent par exemple être des ergots métalliques soudés en face inférieure 10d du renfort annulaire continu 100. La section transversale carrée du renfort annulaire continu 100 facilite l'opération de soudure. Comme illustré notamment sur la figure 4, des structures métalliques complémentaires 20 à profil en U sont fixées sur les amorces d'excroissances 103, pour former des pieds d'appui 21.

Les pieds d'appui 21 ont une hauteur légèrement supérieure à la hauteur des alvéoles 3, et sont répartis en périphérie du moule alimentaire 1, de façon que le moule alimentaire puisse reposer sur un plan d'appui par l'extrémité inférieure des pieds 21, les fonds 3a des alvéoles 3 étant à l'écart du plan d'appui. On favorise ainsi la circulation d'air chaud sur toute la surface des alvéoles 3 dans un four.

On comprend, sur les figures 1 à 5, que la face principale supérieure du moule alimentaire 1 est essentiellement coplanaire avec la face commune d'accès 4, ce qui facilite les opérations de talochage.

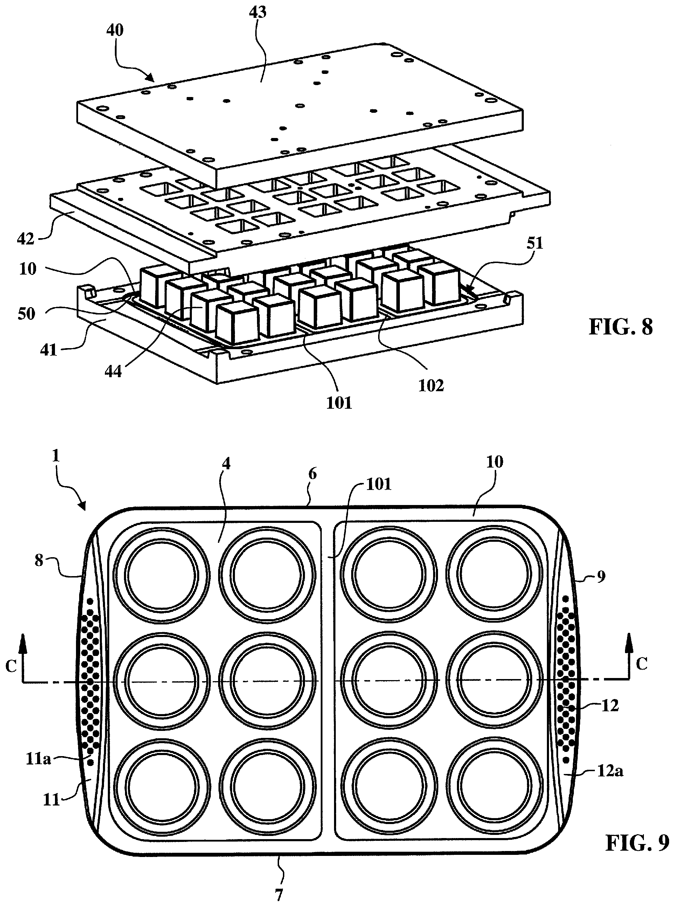

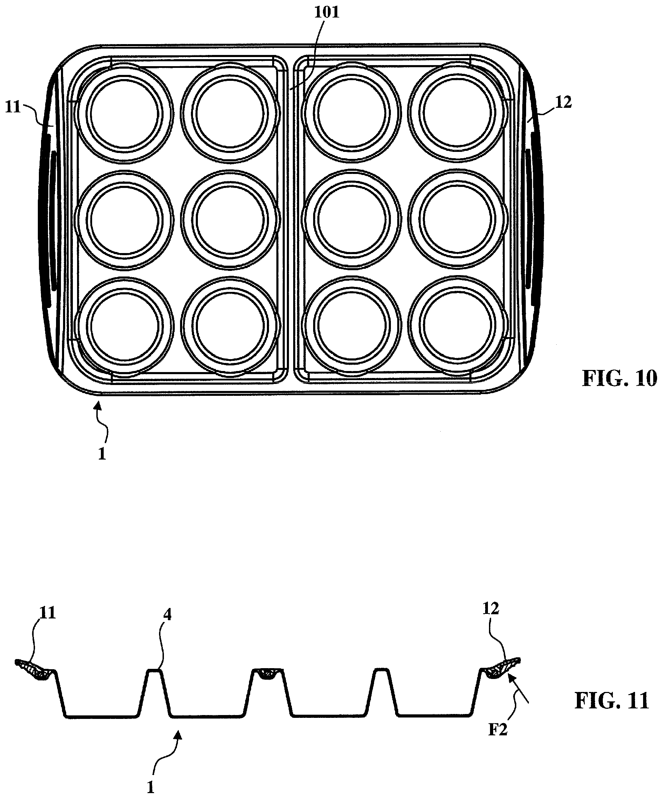

Dans le mode de réalisation illustré sur les figures 9 et 10, le moule alimentaire 1 est dépourvu de pieds d'appui. Il s'agit encore d'un moule pour la cuisine ou la pâtisserie. Les dimensions de ce moule alimentaire 1 sont inférieures à celles du mode de réalisation des figures 1 à 6, sa longueur étant d'environ 40 cm et sa largeur étant d'environ 30 cm.

Une autre différence réside dans la présence d'un seul élément raidisseur intermédiaire 101, divisant la face commune d'accès en deux bandes transversales ayant des superficies similaires l'une de l'autre, l'élément raidisseur intermédiaire 101 restant parallèle aux petits côtés de l'élément raidisseur périphérique 10.

Une autre différence réside dans la section transversale de l'élément raidisseur périphérique 10, de forme carrée de 4 mm par 4 mm.

Une autre différence réside dans l'inclinaison des zones de préhension 11 et 12 : dans ce second mode de réalisation, comme on le voit sur la figure 11, la face principale supérieure du rebord périphérique est légèrement orientée vers l'intérieur, de sorte qu'elle dépasse légèrement au-dessus de la face commune d'accès 4, et de sorte que les zones de préhension 11 et 12 se développent légèrement en oblique vers le haut. Ce mode de réalisation est plutôt adapté à une préhension à deux mains, chaque main étant appliquée sous l'une des zones de préhension 11 ou 12, en appui à la fois vers le haut et vers le centre du moule alimentaire (flèche F2).

Dans tous les modes de réalisation, on trouve avantage à réaliser les éléments raidisseurs en un acier au carbone, présentant une grande rigidité.

En ce qui concerne le matériau de corps de moule, il est composé essentiellement d'un élastomère silicone à base de polydiméthylsiloxane à liaisons vinyle, vulcanisé à chaud en présence d'agents de vulcanisation, de colorant et d'agents de traitement.

On considère maintenant le procédé de réalisation d'un moule alimentaire tel que défini précédemment, ce procédé étant illustré en relation avec les figures 7 et 8.

Sur la figure 7, on prévoit tout d'abord un élément raidisseur périphérique 10, ayant le cas échéant un ou plusieurs éléments raidisseurs intermédiaires 101 et 102, et on place cet élément raidisseur périphérique 10 dans un premier moule de mise en forme 30 comportant un élément de moule inférieur 31 et un élément de moule supérieur 32.

On applique, sur une première face de l'élément raidisseur périphérique 10, à savoir sa face supérieure illustrée sur la figure 7, des bandes d'une première pâte silicone de moulage, telles que la bande 50 illustrée en pointillés, pour recouvrir la quasi-totalité de ladite face supérieure. En présence d'éléments raidisseurs intermédiaires 101 et 102, on applique également des bandes de la première pâte silicone de moulage sur ces éléments raidisseurs intermédiaires 101 et 102.

Ensuite, on ferme le premier moule de mise en forme 30 pour vulcaniser la première pâte silicone de moulage 50 et mettre sous pression l'ensemble éléments raidisseurs 10, 101, 102 - première pâte de silicone ainsi obtenu, et on chauffe cet ensemble dans le premier moule de mise en forme 30 pour réaliser un surmoulage de l'élément raidisseur périphérique 10 et le cas échéant du ou des éléments raidisseurs intermédiaires 101 et 102 avec la première pâte silicone de moulage 50.

Une pression de 70 à 80 kg par centimètre carré peut être satisfaisante. Un échauffement à 180°C pendant trois minutes peut être satisfaisant, dans le cas d'un moule alimentaire de cuisine dont le contour a une taille de 60 x 40 cm, et dont l'épaisseur de paroi est de 0,5 mm environ. Un ajustement de durée et de température pourra être effectué, fonction croissante de l'épaisseur et de la taille du moule alimentaire à réaliser.

Après ouverture du premier moule de mise en forme 30 et refroidissement, on extrait l'ensemble éléments raidisseurs 10, 101, 102 - première pâte de moulage 50 ainsi obtenu hors du premier moule de mise en forme 30, on le retourne et on le pose dans un second moule de mise en forme 40 illustré sur la figure 8. Ce second moule de mise en forme 40 comporte un élément de base 41, un élément intermédiaire 42 et un élément supérieur 43. La première face de l'élément raidisseur périphérique 10, surmoulée par la première pâte de silicone de moulage 50, après retournement, se trouve orientée vers le bas contre l'élément de base 41 du second moule de mise en forme 40, tandis que la seconde face de l'élément raidisseur périphérique 10 est apparente. La première pâte de silicone de moulage 50 vulcanisée supporte le ou les éléments raidisseurs 10, 101, 102 et constitue elle-même l'élément assurant le positionnement du ou des éléments raidisseurs 10, 101, 102 dans le second moule de mise en forme 40.

Comme illustré par la flèche 51, on dispose, sur la seconde face de l'élément raidisseur périphérique 10, et le cas échéant des éléments raidisseurs intermédiaires 101, 102, des bandes d'une seconde pâte de silicone de moulage 51, selon un volume égal à celui de la paroi du moule alimentaire à réaliser. Comme on le voit sur la figure 8, l'élément de base 41 comporte des excroissances 44 destinées à pénétrer dans des lumières correspondantes de l'élément intermédiaire 42, de façon à former les parois des alvéoles. Les fonds des alvéoles sont formés par l'élément supérieur 43 venant en regard des sommets des excroissances 44 de l'élément de base 41. On ferme alors le second moule de mise en forme 40, de façon à chauffer sous pression l'ensemble éléments raidisseurs 10, 101, 102 - première pâte de moulage 50 - seconde pâte de moulage 51 et réaliser ainsi le corps de moule alimentaire avec les alvéoles et le rebord périphérique dans lequel est noyé le renfort périphérique 10 et le cas échéant des éléments raidisseurs intermédiaires 101, 102. Une pression de 70 à 80 kg par centimètre carré peut être satisfaisante. Un échauffement à 180°C pendant trois minutes peut être satisfaisant, dans le cas d'un moule alimentaire dont le contour a une taille de 60 x 40 cm, et dont l'épaisseur de paroi est de 0,5 mm environ. Un ajustement de durée et de température pourra être effectué, fonction croissante de l'épaisseur et de la taille du moule alimentaire à réaliser. L'élément intermédiaire 42 facilite le démoulage, notamment dans le cas d'alvéoles à section transversale ronde ou polygonale et dont la paroi périphérique est sensiblement cylindrique.

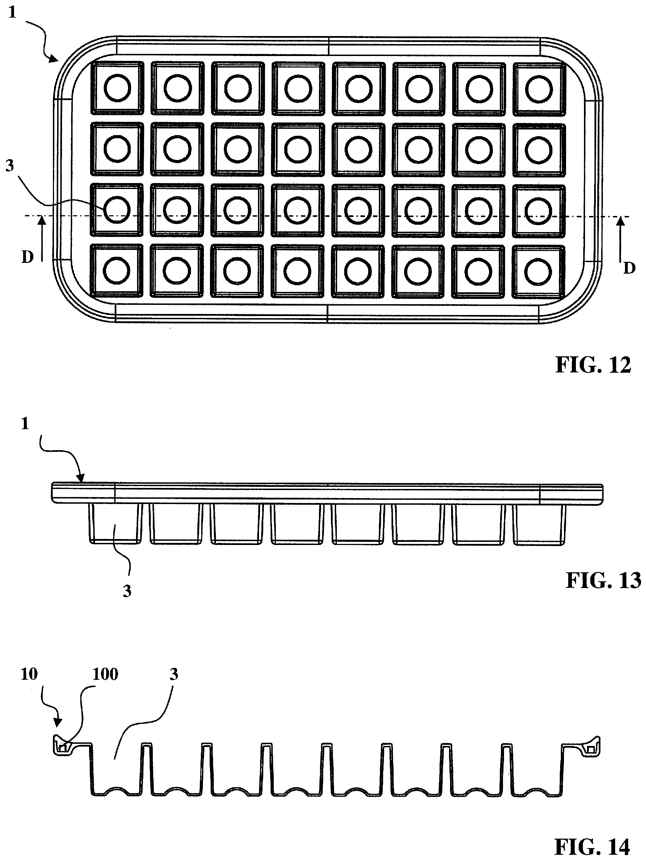

Les figures 12 à 14 illustrent un moule 1 alimentaire dans une forme plus spécialement adaptée à la fabrication de glaçons. La structure du moule 1 alimentaire est similaire de celle des modes de réalisation précédents, avec une pluralité d'alvéoles tels que l'alvéole 3, et avec un élément raidisseur périphérique 10 sous forme d'un renfort annulaire continu 100 dont on distingue deux portions en coupe sur la figure 14.

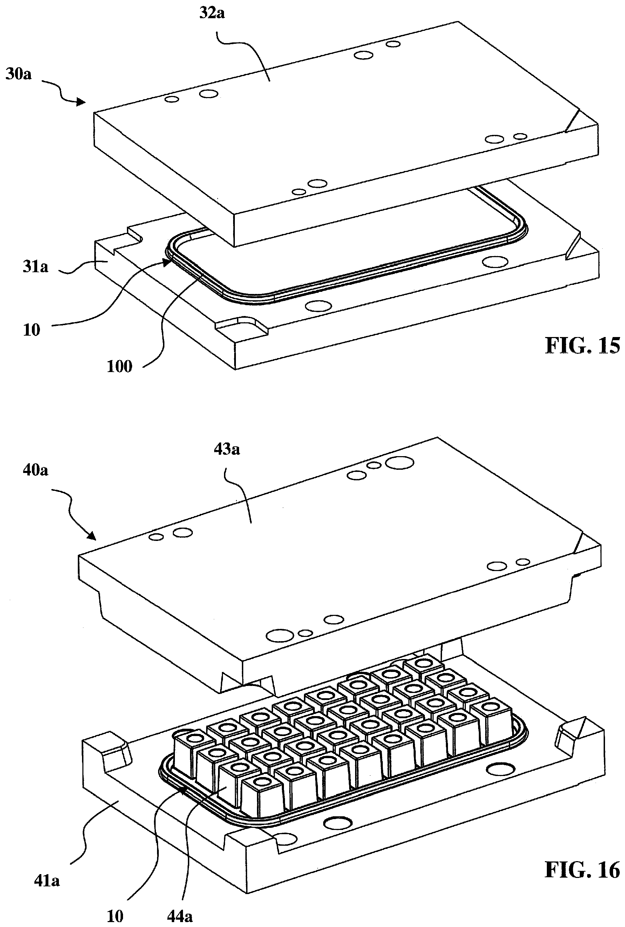

Sur la figure 15, on place l'élément raidisseur périphérique 10 dans un premier moule de mise en forme 30a comportant un élément de moule inférieur 31a et un élément de moule supérieur 32a, et on applique des bandes d'une première pâte silicone de moulage sur une première face de l'élément raidisseur périphérique 10. Après fermeture du premier moule de mise en forme 30a, on réalise par chauffage le surmoulage de l'élément raidisseur périphérique 10 avec la première pâte silicone de moulage.

Après ouverture du premier moule de mise en forme 30a et refroidissement, on retourne et on place l'ensemble élément raidisseur 10 - première pâte de moulage dans un second moule de mise en forme 40a illustré sur la figure 16. Ce second moule de mise en forme 40a comporte un élément de base 41a à excroissances 44a et un élément supérieur 43a, c'est-à-dire qu'il est dépourvu d'élément intermédiaire. Cette forme de second moule de mise en forme 40a convient pour des formes d'alvéoles légèrement tronconiques, dont le démoulage est relativement facile. Le reste du procédé de fabrication se déroule comme indiqué précédemment en relation avec la figure 8.

Selon une première possibilité, applicable à tous les modes de réalisation précédemment décrits, la première pâte de moulage 50 et la seconde pâte de moulage 51 peuvent être identiques, de façon à réaliser un moule alimentaire dont la paroi présente un aspect extérieur uniforme, de même couleur.

En alternative, la première pâte de moulage 50 peut différer de la seconde pâte de moulage 51 au moins par sa couleur, de façon à réaliser un moule alimentaire dont la paroi présente un aspect extérieur à deux couleurs distinctes : la face commune d'accès 4 comporte alors une bande périphérique ayant la couleur et l'aspect de la première pâte de moulage 50 au droit de l'élément raidisseur périphérique 10, avec le cas échéant une ou plusieurs bandes intermédiaires ayant la couleur et l'aspect de la première pâte de moulage 50 au droit de chaque élément raidisseur intermédiaire 101 ou 102, tandis que le reste de la paroi du moule alimentaire a la couleur et l'aspect de la seconde pâte de moulage 51.

On notera que, dans le cas où le moule 1 alimentaire doit comprendre des pieds d'appui 21, comme dans le mode de réalisation des figures 1 à 6, le premier moule de mise en forme 30 comporte des logements recevant les amorces d'excroissances 103, évitant leur surmoulage par la première pâte de silicone. De même, dans ce cas, l'élément intermédiaire 42 du second moule de mise en forme 40 comporte des logements recevant les amorces d'excroissances 103, pour éviter leur surmoulage par la seconde pâte de silicone. Après démoulage du second moule de mise en forme 40, on fixe, sur les amorces d'excroissances 103, des structures métalliques complémentaires 20 (figure 4) pour réaliser les pieds 21. Cette fixation peut être assurée par exemple par collage au moyen d'une colle silicone.

On notera également que la structure de moule alimentaire à pieds d'appui 21, telle que décrite précédemment et illustrée en relation avec les figures 2, 5 et 6, constitue en elle-même une invention indépendante du procédé de fabrication et que le demandeur se réserve de protéger par une ou plusieurs demandes divisionnaires.

On notera enfin que la structure particulière de moule alimentaire à zones de préhension 11, 12 flexibles, telle que décrite précédemment et illustrée en relation avec les figures 4, 9, 10 et 11, constitue en elle-même une invention indépendante du procédé de fabrication et que le demandeur se réserve de protéger par une ou plusieurs demandes divisionnaires.

La présente invention n'est pas limitée aux modes de réalisation qui ont été explicitement décrits, mais elle en inclut les diverses variantes et généralisations contenues dans le domaine des revendications ci-après.

## Revendications

1. Moule (1) alimentaire,
- comprenant un corps de moule alimentaire (2) en un matériau de corps de moule, ayant plusieurs alvéoles (3) à paroi flexible,
- lesdits plusieurs alvéoles (3) étant ouverts selon une face commune d'accès (4),
- la face commune d'accès (4) ayant elle-même un rebord périphérique (5) se développant radialement vers l'extérieur depuis un bord intérieur (5d) marquant la limite avec les alvéoles (3) et jusqu'à un bord extérieur libre (5c),
- le rebord périphérique (5) étant muni d'un élément raidisseur périphérique (10) sous forme d'un renfort annulaire continu (100) avec un ou plusieurs éléments raidisseurs intermédiaires (101, 102),
dans lequel :
- l'élément raidisseur périphérique (10) est entièrement noyé dans le matériau de corps de moule,
- l'élément raidisseur périphérique (10) est bordé extérieurement, selon au moins deux zones de préhension (11, 12) opposées du rebord périphérique (5), par une bande périphérique (11a, 12a) de matériau constituant le corps de moule alimentaire, ladite bande périphérique (11a, 12a) réalisant une augmentation de largeur des zones de préhension (11, 12) et présentant une flexibilité plus grande que celle de l'élément raidisseur périphérique (10),
- autour de l'élément raidisseur périphérique (10), le matériau de corps de moule est dépourvu de passages traversants libres ou obturés entre l'élément raidisseur périphérique (10) et la surface extérieure du matériau de corps de moule,
- le moule (1) comprend plusieurs alvéoles et en outre au moins un élément raidisseur intermédiaire (101, 102), rejoignant des zones opposées de l'élément raidisseur périphérique (10), et entièrement noyé dans le matériau formant la paroi supérieure du corps de moule alimentaire entre des alvéoles adjacents.

2. Moule (1) alimentaire selon la revendication 1, **caractérisé en ce que** le corps de moule alimentaire (2) est en un matériau à base de silicone, de qualité alimentaire, tandis que l'élément raidisseur périphérique (10) est en métal.

3. Moule (1) alimentaire selon la revendication 1, **caractérisé en ce que**, dans les deux zones de préhension (11, 12) opposées du rebord périphérique (5), la face principale supérieure (5a) du rebord périphérique (5) est légèrement orientée vers l'extérieur, de sorte qu'elle est en retrait de la face commune d'accès (4), et de sorte que les zones de préhension (11, 12) se développent légèrement en oblique vers le bas.

4. Moule (1) alimentaire selon la revendication 1, **caractérisé en ce que**, dans les deux zones de préhension (11, 12) opposées du rebord périphérique (5), la face principale supérieure (5a) du rebord périphérique (5) est légèrement orientée vers l'intérieur, de sorte qu'elle dépasse légèrement au-dessus de la face commune d'accès (4), et de sorte que les zones de préhension (11, 12) se développent légèrement en oblique vers le haut.

5. Moule (1) alimentaire selon l'une quelconque des revendications 1 à 4, **caractérisé en ce que** le corps de moule alimentaire (2) présente un contour rectangulaire, et **en ce que** ledit au moins un élément raidisseur intermédiaire (101, 102) rejoint des zones opposées de deux grands côtés de l'élément raidisseur périphérique (10).

6. Moule (1) alimentaire selon la revendication 5, **caractérisé en ce que** le corps de moule alimentaire (2) présente un contour dont la longueur est d'environ 60 cm et la largeur d'environ 40 cm, avec deux éléments raidisseurs intermédiaires (101, 102) rejoignant des zones opposées respectives des deux grands côtés de l'élément raidisseur périphérique (10), les éléments raidisseurs intermédiaires (101, 102) étant parallèles aux petits côtés de l'élément raidisseur périphérique (10) et divisant la face commune d'accès (4) en trois bandes transversales ayant des superficies similaires les unes aux autres.

7. Moule (1) alimentaire selon la revendication 6, **caractérisé en ce que** l'élément raidisseur périphérique (10) présente une section transversale de forme carrée, de 6 mm par 6 mm, en acier au carbone.

8. Moule (1) alimentaire selon la revendication 5, **caractérisé en ce que** le corps de moule alimentaire (2) présente un contour dont la longueur est d'environ 40 cm et la largeur d'environ 30 cm, avec un élément raidisseur intermédiaire (101) rejoignant des zones opposées respectives des deux grands côtés de l'élément raidisseur périphérique (10), l'élément raidisseur intermédiaire (101) étant parallèle aux petits côtés de l'élément raidisseur périphérique (10) et divisant la face commune d'accès (4) en deux bandes transversales ayant des superficies similaires l'une de l'autre.

9. Moule (1) alimentaire selon la revendication 8, **caractérisé en ce que** l'élément raidisseur périphérique (10) présente une section transversale de forme carrée, de 4 mm par 4 mm, en acier au carbone.

10. Moule (1) alimentaire selon l'une quelconque des revendications 1 à 9, **caractérisé en ce que** l'élément raidisseur périphérique (10) est solidaire d'excroissances (103, 20) se développant perpendiculairement et à l'écart de la face commune d'accès (4), au-delà des fonds (3a) des alvéoles (3), pour constituer des pieds d'appui (21) par lesquels le moule alimentaire (1) peut reposer sur un plan d'appui en maintenant les fonds (3a) des alvéoles à l'écart du plan d'appui.

11. Procédé de réalisation d'un moule (1) alimentaire selon la revendication 1, **caractérisé en ce qu'**il comprend les étapes suivantes :
- prévoir un élément raidisseur périphérique (10) sous forme d'un renfort annulaire continu (100) ayant une première face et une seconde face, et le cas échéant un ou plusieurs éléments raidisseurs intermédiaires (101, 102) rejoignant des zones opposées de l'élément raidisseur périphérique (10) et ayant une première face et une seconde face,
- appliquer, sur la première face de l'élément raidisseur périphérique (10) et sur la première face du ou des éléments raidisseurs intermédiaires (101, 102), une première pâte de moulage (50),
- chauffer sous pression l'ensemble éléments raidisseurs (10, 101, 102) - première pâte de moulage (50) ainsi obtenu dans un premier moule de mise en forme (30) réalisant un surmoulage de la première face de l'élément raidisseur périphérique (10) et du ou des éléments raidisseurs intermédiaires (101, 102) avec la première pâte de moulage (50), puis laisser refroidir,
- retourner l'ensemble éléments raidisseurs (10, 101, 102) - première pâte de moulage (50) ainsi obtenu et disposer sur la seconde face du ou des éléments raidisseurs (10, 101, 102) des bandes d'une seconde pâte de moulage (51) selon un volume égal à celui de la paroi du moule alimentaire à réaliser,
- placer l'ensemble éléments raidisseurs (10, 101, 102) - première pâte de moulage (50) - seconde pâte de moulage (51) ainsi obtenu dans un second moule de mise en forme (40) et le chauffer sous pression pour réaliser un corps de moule alimentaire (2) ayant plusieurs alvéoles (3) à paroi flexible ouverts selon une face commune d'accès (4), la face commune d'accès (4) étant elle-même limitée par un rebord périphérique (5) se développant radialement vers l'extérieur, l'élément raidisseur périphérique (10) et le cas échéant le ou les éléments raidisseurs intermédiaires (101, 102) étant entièrement noyés dans la pâte de moulage (50, 51), puis laisser refroidir.

12. Procédé de réalisation d'un moule (1) alimentaire selon la revendication 11, dans lequel le moule alimentaire comprend des pieds d'appui (21), **caractérisé en ce que** :
- l'élément raidisseur périphérique (10) comporte initialement un renfort annulaire métallique (100) continu solidaire d'amorces d'excroissances métalliques (103),
- le premier moule de mise en forme (30) comporte des logements recevant les amorces d'excroissances (103), évitant leur surmoulage par la pâte de moulage lors du chauffage sous pression de l'ensemble constitué par l'élément raidisseur périphérique (10) et la première pâte de moulage (50),
- le second moule de mise en forme (40) comporte des logements recevant les amorces d'excroissances (103), évitant leur surmoulage par la pâte de moulage lors du chauffage sous pression de l'ensemble constitué par l'élément raidisseur périphérique (10) et les première et seconde pâtes de moulage.

13. Procédé de réalisation d'un moule (1) alimentaire selon la revendication 12, dans lequel, après démoulage hors du second moule de mise en forme (40), on fixe, sur les amorces d'excroissances (103), des structures métalliques complémentaires (20) réalisant les pieds d'appui (21).

## Patentansprüche

1. Lebensmittelform (1),
• umfassend einen Lebensmittelformkörper (2) mit einem Formkörpermaterial mit mehreren Zellen (3) mit flexibler Wandung,
• wobei besagte mehrere Zellen (3) entlang einer gemeinsamen Zugangsfläche (4) offen sind,
• die gemeinsame Zugangsfläche (4) selbst eine umlaufende Umrandung (5) hat, die sich radial nach außen ausgehend von einem Innenrand (5d) entwickelt und die die Grenze mit den Zellen (3) und bis zu einer freien Außenrand (5c) markiert,
• die umlaufende Umrandung (5) mit einem umlaufenden Versteifungselement (10) in Form einer kontinuierlichen ringförmigen Verstärkung (100) mit einem oder mehreren Zwischenversteifungselementen (101, 102) versehen ist,
wobei
• das umlaufende Versteifungselement (10) vollständig in das Formkörpermaterial eingebettet ist,
• das umlaufende Versteifungselement (10) außen, entlang mindestens zwei gegenüberliegende Handhabungszonen (11, 12) der umlaufenden Umrandung (5), von einem umlaufenden Band (11a, 12a) des Materials des Lebensmittelformkörpers begrenzt ist, wobei besagtes umlaufendes Band (11a, 12a) eine Erhöhung der Breite der Handhabungszonen (11, 12) realisiert und eine größere Flexibilität als die des umlaufenden Versteifungselements (10) präsentiert,
• um das umlaufende Versteifungselement (10) das Material des Lebensmittelformkörpers frei ist von freien Durchgangspassagen oder Öffnungen zwischen dem umlaufenden Versteifungselement (10) und der Außenfläche des Materials des Lebensmittelformkörpers,
• die Lebensmittelform (1) mehrere Zellen umfasst und darüber hinaus mindestens ein Zwischenversteifungselement (101, 102), das gegenüberliegende Zonen des umlaufenden Versteifungselements (10) verbindet und vollständig in das Material eingebettet ist, das die obere Wandung des Lebensmittelformkörpers zwischen benachbarten Zellen ausformt.

2. Lebensmittelform (1) gemäß Anspruch 1, **dadurch gekennzeichnet, dass** der Lebensmittelformkörper (2) mit einem Material auf Basis von Silikon in Lebensmittelqualität, hergestellt ist, wohingegen das umlaufende Versteifungselement (10) mit Metall hergestellt ist.

3. Lebensmittelform (1) gemäß Anspruch 1, **dadurch gekennzeichnet, dass** in den beiden gegenüberliegenden Handhabungszonen (11, 12) der umlaufenden Umrandung (5) die obere Hauptfläche (5a) der umlaufenden Umrandung (5) leicht zum Äußeren orientiert ist, so dass sie bezogen auf die gemeinsame Zugangsfläche (4) zurückgesetzt ist, so dass sich die Handhabungszonen (11, 12) leicht schräg nach unten entwickeln.

4. Lebensmittelform (1) gemäß Anspruch 1, **dadurch gekennzeichnet, dass** in den beiden gegenüberliegenden Handhabungszonen (11, 12) der umlaufenden Umrandung (5) die obere Hauptfläche (5a) der umlaufenden Umrandung (5) leicht zum Inneren orientiert ist, so dass sie oberhalb der gemeinsamen Zugangsfläche (4) vorsteht, so dass sich die Handhabungszonen (11, 12) leicht schräg nach oben entwickeln.

5. Lebensmittelform (1) gemäß einem der Ansprüche 1 bis 4, **dadurch gekennzeichnet, dass** der Lebensmittelformkörper (2) eine rechteckige Kontur präsentiert und dadurch, dass besagtes mindestens eine Zwischenversteifungselement (101, 102) gegenüberliegende Zonen von zwei großen Seiten des umlaufenden Versteifungselements (10) verbindet.

6. Lebensmittelform (1) gemäß Anspruch 5, **dadurch gekennzeichnet, dass** der Lebensmittelformkörper (2) eine Kontur präsentiert, deren Länge etwa 60 cm und deren Breite etwa 40 cm beträgt, wobei zwei Zwischenversteifungselemente (101, 102) jeweils gegenüberliegende Zonen an den beiden Längsseiten des umlaufenen Versteifungselements (10) verbinden, wobei die Zwischenversteifungselemente (101, 102) parallel zu den kleinen Seiten des umlaufenden Versteifungselements (10) sind und die gemeinsame Zugangsfläche (4) in drei Querbänder mit zueinander ähnlichen Bereichen teilen.

7. Lebensmittelform (1) gemäß Anspruch 6, **dadurch gekennzeichnet, dass** das umlaufende Versteifungselement (10) einen quadratischen Querschnitt von 6 mm x 6 mm aus Kohlenstoffstahl präsentiert.

8. Lebensmittelform (1) gemäß Anspruch 5, **dadurch gekennzeichnet, dass** der Lebensmittelformkörper (2) eine Kontur präsentiert, deren Länge etwa 40 cm und deren Breite etwa 30 cm beträgt, wobei ein Zwischenversteifungselement (101) jeweils gegenüberliegende Zonen an den beiden Längsseiten des umlaufenen Versteifungselements (10) verbindet, wobei das Zwischenversteifungselement (101) parallel zu den kleinen Seiten des umlaufenden Versteifungselements (10) ist und die gemeinsame Zugangsfläche (4) in zwei Querbänder mit zueinander ähnlichen Bereichen teilt.

9. Lebensmittelform (1) gemäß Anspruch 8, **dadurch gekennzeichnet, dass** das umlaufende Versteifungselement (10) einen quadratischen Querschnitt von 4 mm x 4 mm aus Kohlenstoffstahl präsentiert.

10. Lebensmittelform (1) gemäß einem der Ansprüche 1 bis 9, **dadurch gekennzeichnet, dass** das umlaufende Versteifungselement (10) einstückig mit Vorsprüngen (103, 20) ist, die sich rechtwinklig und wegwärts von der gemeinsamen Zugangsfläche (4) über die Basen (3a) der Zellen (3) hinaus entwickeln. um Auflagefüße (21) auszubilden, mit denen die Lebensmittelform (1) auf einer Auflageebene ruhen kann unter Aufrechterhaltung eines Abstands der Basen (3a) der Zellen von der Auflageebene.

11. Verfahren zur Herstellung einer Lebensmittelform (1) gemäß Anspruch 1, **dadurch gekennzeichnet, dass** es die folgenden Schritte umfasst:
• Bereitstellen eines umlaufenden Versteifungselements (10) in Form einer kontinuierlichen ringförmigen Verstärkung (100), die eine erste Fläche und eine zweite Fläche und gegebenenfalls ein oder mehrerer Zwischenversteifungselemente (101, 102) haben, die gegenüberliegende Zonen des umlaufenden Versteifungselements (10) verbinden und eine erste Fläche und eine zweite Fläche haben,
• Aufbringen einer ersten Formpaste (50) auf einer ersten Fläche des umlaufenden Versteifungselements (10) und auf einer ersten Fläche des oder der Zwischenversteifungselemente (101, 102),
• Erwärmen der gesamten Versteifungselemente (10, 101, 102) unter Druck - erste Formpaste (50), so erhalten in einer ersten Formgebungsform (30), die ein Überformen der ersten Fläche des umlaufenden Versteifungselements (10) und des oder der Zwischenversteifungselemente (101, 102) mit der ersten Formpaste (50) realisiert, dann abkühlen lassen,
• Wenden der Anordnung der Versteifungselemente (10, 101, 102) - erste Formpaste (50), so erhalten und Anordnen, auf der zweiten Fläche des oder der Versteifungselemente (10, 101, 102), von Bändern einer zweiten Formpaste (51) gemäß einem Volumen, das dem der Wandung der herzustellenden Lebensmittelform entspricht,
• Platzieren der Anordnung der Versteifungselemente (10, 101, 102) - erste Formpaste (50) - zweite Formpaste (51), so erhalten, in einer zweiten Formgebungsform (40) und Erhitzen unter Druck, um einen Lebensmittelformkörper (2) mit einer oder mehreren Zellen (3) mit flexiblen Wandungen herzustellen, die entlang einer gemeinsamen Zugangsfläche (4) offen sind, wobei die gemeinsame Zugangsfläche (4) selbst durch eine umlaufende Umrandung (5) begrenzt ist, die sich radial nach außen entwickelt, wobei das umlaufende Versteifungselement (10) und gegebenenfalls das oder die Zwischenversteifungselemente (101, 102) vollständig in die Formpaste (50, 51) eingebettet sind, um sie abkühlen zu lassen.

12. Verfahren zur Herstellung einer Lebensmittelform (1) gemäß Anspruch 11, wobei die Lebensmittelform Auflagefüße (21) umfasst, **dadurch gekennzeichnet, dass**:
• das umlaufende Versteifungselement (10) anfänglich eine kontinuierliche Metallringverstärkung (100) aufweist, die einstückig mit Ansätzen von Vorsprüngen (103) integriert sind,
• die erste Formgebungsform (30) Lager aufweist, die die Ansätze der Vorsprünge (103) aufnehmen und deren Überformen durch die Formpaste während des Erhitzens unter Druck der durch das umlaufende Versteifungselement (10) und der ersten Formpaste (50) gebildeten Anordnung verhindern,
• die zweite Formgebungsform (40) Lager aufweist, die die Ansätze der Vorsprünge (103) aufnehmen und deren Überformen durch die Formpaste während des Erhitzens unter Druck der durch das umlaufende Versteifungselement (10) der ersten und der zweiten Formpaste gebildeten Anordnung verhindern.

13. Verfahren zur Herstellung einer Lebensmittelform (1) gemäß Anspruch 12, wobei, nach dem Entformen aus der zweiten Formgebungsform (40), komplementäre Metallstrukturen (20) an den Ansätzen der Vorsprünge (103) zum Herstellen der Auflagefüße (21) fixiert sind.

## Claims

1. Food mould (1),
- comprising a food mould body (2) made of a mould body material, having several cells (3) with flexible wall,
- said several cells (3) being open on a common access face (4),
- the common access face (4) itself having a peripheral rim (5) extending radially outward from an inner edge (5d) marking the boundary with the cells (3) and to a free outer edge (5c),
- the peripheral rim (5) being provided with a peripheral stiffening element (10) in the form of a continuous annular reinforcement (100) with one or more intermediate stiffening elements (101, 102),
wherein:
- the peripheral stiffening element (10) is entirely embedded in the mould body material,
- the peripheral stiffening element (10) is edged externally, in at least two gripping zones (11, 12) opposite the peripheral rim (5), by a peripheral strip (11a, 12a) of material forming the food mould body, said peripheral strip (11a, 12a) producing an increase in width of the gripping zones (11, 12) and exhibiting a greater flexibility than that of the peripheral stiffening element (10),
- around the peripheral stiffening element (10), the food mould body has through passages free or blocked between the peripheral stiffening element (10) and the outer surface of the food mould body,
- the mould (1) comprises several cells and, in addition, at least one intermediate stiffening element (101, 102), joining opposing zones of the peripheral stiffening element (10), and entirely embedded in the material forming the top wall of the food mould body between adjacent cells.

2. Food mould (1) according to Claim 1, **characterized in that** the food mould body (2) is made of a silicone-based material, of food quality, whereas the peripheral stiffening element (10) is made of metal.

3. Food mould (1) according to Claim 1, **characterized in that**, in the two opposing gripping zones (11, 12) of the peripheral rim (5), the top main face (5a) of the peripheral rim (5) is slightly oriented outward, so that it is set back from the common access face (4), and so that the gripping zones (11, 12) extend slightly obliquely downward.

4. Food mould (1) according to Claim 1, **characterized in that**, in the two opposing gripping zones (11, 12) of the peripheral rim (5), the top main face (5a) of the peripheral rim (5) is slightly oriented inward, so that it extends slightly above the common access face (4), and so that the gripping zones (11, 12) extend slightly obliquely upward.

5. Food mould (1) according to any one of Claims 1 to 4, **characterized in that** the food mould body (2) has a rectangular outline, and wherein said at least one intermediate stiffening element (101, 102) joins opposing zones of two long sides of the peripheral stiffening element (10).

6. Food mould (1) according to Claim 5, **characterized in that** the food mould body (2) has an outline whose length is approximately 60 cm and width is approximately 40 cm, with two intermediate stiffening elements (101, 102) joining respective opposing zones of the two long sides of the peripheral stiffening element (10), the intermediate stiffening elements (101, 102) being parallel to the short sides of the peripheral stiffening element (10) and dividing the common access face (4) into three transverse strips having mutually similar surface areas.

7. Food mould (1) according to Claim 6, **characterized in that** the peripheral stiffening element (10) has a cross section of square shape, 6 mm by 6 mm, made of carbon steel.

8. Food mould (1) according to Claim 5, **characterized in that** the food mould body (2) has an outline whose length is approximately 40 cm and width is approximately 30 cm, with an intermediate stiffening element (101) joining respective opposing zones of the two long sides of the peripheral stiffening element (10), the intermediate stiffening element (101) being parallel to the short sides of the peripheral stiffening element (10) and defining the common access face (4) into two transverse strips having mutually similar surface areas.

9. Food mould (1) according to Claim 8, **characterized in that** the peripheral stiffening element (10) has a cross section of square form, 4 mm by 4 mm, made of carbon steel.

10. Food mould (1) according to any one of Claims 1 to 9, **characterized in that** the peripheral stiffening element (10) is integral with protuberances (103, 20) extending perpendicularly and away from the common access face (4), beyond the bottoms (3a) of the cells (3), to constitute supporting feet (21) by which the food mould (1) can rest on a bearing plane while keeping the bottoms (3a) of the cells away from the bearing plane.

11. Method for producing a food mould (1) according to Claim 1, **characterized in that** it comprises the following steps:
- providing a peripheral stiffening element (10) in the form of a continuous annular reinforcement (100) having a first face and a second face, and, if necessary, one or more intermediate stiffening elements (101, 102) joining opposing zones of the peripheral stiffening element (10) and having a first face and a second face,
- applying, on the first face of the peripheral stiffening element (10) and on the first face of the intermediate stiffening element or elements (101, 102), a first moulding plaster (50),
- heating under pressure the assembly of stiffening elements (10, 101, 102) and first moulding paste (50) thus obtained in a first shaping mould (30) producing an overmoulding of the first face of the peripheral stiffening element (10) and of the intermediate stiffening element or elements (101, 102) with the first moulding paste (50), then leaving to cool,
- turning over the assembly of stiffening elements (10, 101, 102) and first moulding paste (50) thus obtained and arranging, on the second face of the stiffening element or elements (10, 101, 102), strips of a second moulding paste (51) in a volume equal to that of the wall of the food mould to be produced,
- placing the assembly of stiffening elements (10, 101, 102), first moulding paste (50) and second moulding paste (51) thus obtained in a second shaping mould (40) and heating it under pressure to produce a food mould body (2) having several cells (3) with flexible wall that are open on a common access face (4), the common access face (4) being itself limited by a peripheral rim (5) extending radially outward, the peripheral stiffening element (10) and, if necessary, the intermediate stiffening element or elements (101, 102) being entirely embedded in the moulding paste (50, 51), then leaving to cool.

12. Method for producing a food mould (1) according to Claim 11, **characterized in that** the food mould comprises supporting feet (21), wherein:
- the peripheral stiffening element (10) initially comprises a continuous metal annular reinforcement (100) with integral beginnings of metal protuberances (103),
- the first shaping mould (30) comprises housings receiving the beginnings of protuberances (103), preventing the overmoulding thereof by the silicone paste during the heating under pressure of the assembly consisting of the peripheral stiffening element (10) and the first moulding paste (50),
- the second shaping mould (40) comprises housings receiving the beginnings of protuberances (103), preventing the overmoulding thereof by the moulding paste during the heating under pressure of the assembly consisting of the peripheral stiffening element (10) and the first and second moulding pastes.

13. Method for producing a food mould (1) according to Claim 12, **characterized in that**, after mould-stripping from the second shaping mould (40), complementary metal structures (20) are fixed to the beginnings of protuberances (103), producing the supporting feet (21) .
